# EUROPEAN PATENT APPLICATION

(11) **EP 3 742 362 A1**
(43) Date of publication of application: **25.11.2020**
(21) Application number: 20175949.5
(22) Date of filing: 21.05.2020
(51) Int. Cl.: G06Q 10/02, G06Q 10/06, G06Q 10/08

(54) **ITEM MANAGEMENT METHOD, BLOCKCHAIN ANALYSIS METHOD AND COMPUTER SYSTEM USING THE SAME**

(30) Priority: 21.05.2019 US 201962850992 P; 29.11.2019 US 201962941999 P
(71) Applicant: Obook Inc., New Taipei City 231 (TW)
(72) Inventor: Wang, Chun-Kai, 116 Taipei City (TW); Hsieh, Chung-Han, 115 Taipei City (TW); Teng, Hsiu-An, 104 Taipei City (TW); Liu, Chih-Yang, 110 Taipei City (TW); Chen, Chun-Jen, 238 New Taipei City (TW); Liao, Jun-De, 335 Taoyuan City (TW); Weng, Pei-Hsuan, 235 New Taipei City (TW); Lin, Zih-Hao, 266 Yilan County (TW)
(74) Representative: Straus, Alexander

(57) **Abstract**

A method (30) of item management, comprises establishing a blockchain network comprising at least a wallet, which is corresponding to at least a container (302); issuing a first token corresponding to a plurality of items to a first wallet of the at least a wallet in the blockchain network when the plurality of items is added to a first container of the at least a container (304); and modifying a status of the first token according to a status of the plurality of items in the first container (306).

## Description

### Field of the Invention

The present invention relates to an item management method, a blockchain analysis method and a computer system using the same, and more particularly, to an item management method, a blockchain analysis method and a computer system capable of enhancing the convenience of retrieving information of items via establishing a relationship between the items and a blockchain.

### Background of the Invention

Item management systems may be applied to track inventory levels, orders, sales, and deliveries, and may also be used in the manufacturing industry to create a work order, bill of materials, or to manage or keep items/products/materials under surveillance. For example, a store may manage products through a warehousing system; a factory may control the material logistics of the production line; a hotel and transport operator may survey the consumer's preference. Therefore, the item management systems have been widely used in various fields, which allow users to record information about the items under surveillance. However, the item management systems may be costly and too complex for small businesses and require dedicated personnel to operate.

Furthermore, an item management system based on a blockchain network is provided in the prior art, which produces a secure record or registry of ownership of assets, transactions, and other information. However, the retrieving and accessing performance may be lowered when the number of transactions increases due to increasing blocks in the blockchain network.

Therefore, it is necessary to improve the prior art.

### Summary of the Invention

It is therefore a primary objective of the present application to provide an item management method, blockchain analysis method and computer system using the same, to improve over disadvantages of the prior art.

This is achieved by a computer system according to the independent claim 10 or by methods according to the independent claims 1 and 6 here below. The dependent claims pertain to corresponding further developments and improvements.

As will be seen more clearly from the detailed description following below, a method of item management comprises establishing a blockchain network comprising at least a wallet, which is corresponding to at least a container; issuing a first token corresponding to a plurality of items to a first wallet of the at least a wallet in the blockchain network when the plurality of items is added to a first container of the at least a container; and modifying a status of the first token according to a status of the plurality of items in the first container.

Another embodiment of the present invention discloses an analysis method for a blockchain network, wherein the blockchain network comprises at least a wallet corresponding to at least a container, which comprises at least an item, and the at least a wallet is configured to store at least a token corresponding to the at least an item. The analysis method comprises retrieving a status of the at least a token stored in the at least a wallet; and obtaining a statistic of the at least an item within the at least a container according to the status of the at least a token.

Another embodiment of the present invention discloses a computer system, comprises a processing unit; and a storage unit, storing a program code, wherein the program code instructs the processing unit to execute the following steps: establishing a blockchain network comprising at least a wallet, which is corresponding to at least a container; issuing a first token corresponding to a plurality of items to a first wallet of the at least a wallet in the blockchain network when the plurality of items is added to a first container of the at least a container; and modifying a status of the first token according to a status of the plurality of items in the first container.

Another embodiment of the present invention discloses a computer system for analyzing a blockchain network, wherein the blockchain network comprises at least a wallet corresponding to at least a container, which comprises at least an item, and the at least a wallet is configured to store at least a token corresponding to the at least an item. The computer system comprises a processing unit; and a storage unit, storing a program code, wherein the program code instructs the processing unit to execute the following steps: retrieving a status of the at least a token stored in the at least a wallet; and obtaining a statistic of the at least an item within the at least a container according to the status of the at least a token.

### Brief Description of the Drawings

FIG. 1 is a schematic diagram of a tokenization blockchain in the prior art.
FIG. 2 is a schematic diagram of a token architecture to an embodiment of the present invention.
FIG. 3A is a schematic diagram of an item management process according to an embodiment of the present invention.
FIG. 3B is a schematic diagram of a blockchain analysis process according to an embodiment of the present invention.
FIG. 4 is a schematic diagram of a computer system according to an embodiment of the present invention.

### Detailed Description

Certain terms are used throughout the description and following claims to refer to particular components. As one skilled in the art will appreciate, manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to ...". In addition, the term "container" represents a virtual or physical one that contains or retains assets. Accordingly, the term "wallet" is intended to mean an electronic device, online service, or software program, which is configured to deposit digital asset.

The blockchain technique is widely utilized in different applications, which is typically managed by a peer-to-peer network collectively adhering to a protocol for inter-node communication and validating new blocks. Once recorded, the data in any given block of a blockchain cannot be altered retroactively without the alteration of all subsequent blocks, which requires consensus of the network majority. Tokenization is a process where some form of assets is converted into a token, which may be moved, stored, or recorded on a blockchain. In other words, tokenization converts the value of an object such as a painting or carbon credit into a token that can be transferred and manipulated on a blockchain system. For example, computing power or electrical power may be traded when they are under tokenization.

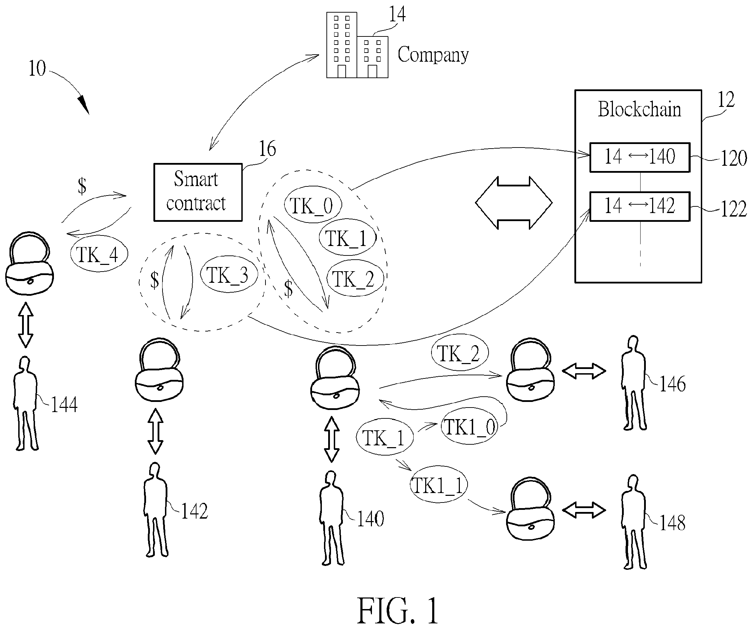

FIG. 1 is a schematic diagram of a tokenization blockchain system 10. The tokenization blockchain system 10 comprises tokens TK_0, TK_1, TK_2, TK_3 and TK 4, a blockchain 12, a wallet of the company 14, wallets of investors 140, 142 and 144, and a smart contract 16, wherein each token represents $100 fund to the company 14, i.e., a part of the company's ownership. Once the wallet of the company 14 receives fund from the investors 140, 142 and 144, the smart contract 16 may be triggered to send at least a token representing the fund to the wallets of the investors 140, 142, and 144. As shown in FIG.1, the wallet of the investor 140 receives the tokens TK_0, TK_1 and TK_2 from the smart contract 16; the wallet of the investor 142 receives the token TK_3 from the smart contract 16; and the wallet of the investor 144 receives the token TK_4 from the smart contract 16. In other words, the company 14 has $500 of funding from the wallets of the investors 140, 142 and 144, and each token represents one-fifth ownership of the company 14. As can be seen, all the transactions of the tokens TK_0 TK_1, TK_2, TK_3 and TK_4 are recorded into a plurality of blocks in the blockchain 12. For example, the block 120 records the transaction between the investor 140 and the company 14, and the block 122 records the transaction between the investor 142 and the company 14. Once a block of the blockchain 12 is confirmed, data in the block cannot be altered anymore.

In addition, the wallet of the investor 140 may transfer the token TK_2 to a third party 146 because of sale, gift, exchange, or succession, which represents that one-fifth ownership is transferred to the third party 146. More specifically, the wallet 140 owning the token TK_2 has the right, within the limits of the acts and regulations, to use, make profit from, and dispose of the token TK_2 freely as the right of real assets.

Moreover, the wallet of the investor 140 may further transfer half of the token TK_1 to a third party 148 by splitting the token TK_1 into sub-tokens TK_1_0 and TK_1_1, which are represented as one-tenth ownership; in other words, the third party 148 acquires the one-tenth ownership from the investor 140. Note that, splitting a token into a plurality of sub-tokens causes information of the token to be fragmented into the plurality of sub-tokens, which would cause fragmented data in the corresponding blocks. Moreover, fragmented data in the blocks would result in inefficiency and opacity.

In this regard, the present invention provides a method to manage the tokenization blockchain system, so as to reduce the retrieving efforts, and save the operation cost via establishing a relationship between items and a blockchain.

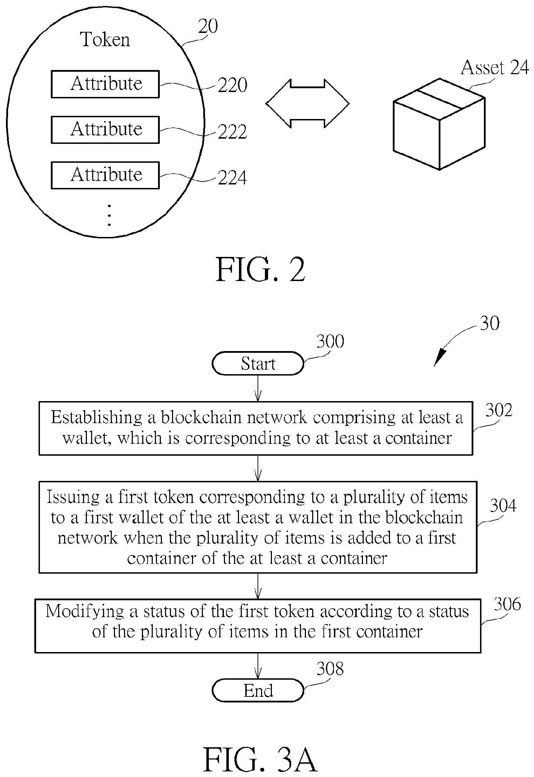

FIG. 2 is a schematic diagram of an architecture of a token 20 according to an embodiment of the present invention. As shown in FIG. 2, the token 20 is corresponding to an asset 24, and comprises attributes 220, 222 and 224. The attributes 220, 222 and 224 may represent a status of the token 20, and may be utilized for describing a status of the asset 24. For example, when the asset 24 is a batch of vaccine, the attribute 220 may record the date of manufacturing and/or validation of the batch of vaccine, the attribute 222 may record a transaction history of the token 20 to record a transfer history of the batch of vaccine, and the attribute 224 may record a ratio of the vaccine such that different tokens may be corresponding to different proportions of the vaccine. In another example, if the asset 24 is a one-day accommodation ticket, the attribute 220 may record a reservation date of the one-day accommodation ticket, the attribute 222 may record a bed configuration related to the one-day accommodation ticket, and the attribute 224 may record a smoking prohibition of a room corresponding to the one-day accommodation ticket. Moreover, if the asset 24 is a batch of restaurant tickets, the attribute 220 may record a reservation date of the batch of restaurant tickets, the attribute 222 may record meal options (e.g. vegetarian, gluten intolerant meal, diabetic meal, Kosher meal, etc.), and the attribute 224 may record a smoking prohibition. In short, the status of the asset 24 may be recorded by at least an attribute in the token 20.

In addition, the number of the attributes included in the token 20 may be varied. In other words, there may be a new attribute added into or an existing attribute removed from the token 20 to fit actual scenarios. For example, if the asset 24 represents the vaccine, the token 20 may be added with an attribute to describe whether the vaccine is expired or not; if the asset 24 represents the one-day accommodation ticket, the token 20 may be added with a duty-performance attribute to describe whether the contract has been performed or not.

Notably, the present invention may be applied to a virtual asset as well. In other words, the asset 24 may be a real asset or a virtual asset. For example, the token may be a digital asset corresponding to a virtual treasure in an Internet game. Therefore, the term "item" or "items" in the following may be regarded as a whole or part of the real or virtual asset, as long as the asset is needed for surveillance.

FIG. 3A is a schematic diagram of an item management process 30 according to an embodiment of the present invention. The item management process 30 comprises the following steps:
Step 300: Start.
Step 302: Establishing a blockchain network comprising at least a wallet, which is corresponding to at least a container.
Step 304: Issuing a first token corresponding to a plurality of items to a first wallet of the at least a wallet in the blockchain network when the plurality of items is added to a first container of the at least a container.
Step 306: Modifying a status of the first token according to a status of the plurality of items in the first container.
Step 308: End.

To record the status of the items under surveillance, the embodiment establishes a blockchain network in Step 302, wherein the blockchain network comprises at least a wallet corresponding to at least a container, each of the at least a container may contain at least an item, and a wallet of the at least a wallet may store a token corresponding to the at least an item. In other words, in the embodiment, a wallet in the blockchain network represents a container, and a token stored in the wallet represents items stored in the corresponding container. By such relationships, a token in the blockchain network of the embodiment is utilized to reflect information or status of a plurality of items in a corresponding container. Note that, as long as a token has suitable attributes to record the item information, the token may by applied in the embodiment. For example, the token 20 shown in FIG. 2 may be applied, stored in a wallet and corresponding to a hundred doses of vaccine, in order to record the status of the hundred doses of vaccine. Furthermore, to keep data integrity, the embodiment of the present invention may further use a plurality of blocks in the blockchain network to record modifications to the token. For example, a block in the blockchain network may record the attribute 224 of the token 20. Based on the characteristics that the confirmed block cannot be modified anymore, the accuracy of the data stored in the block may be ensured.

In Step 304, the embodiment issues a first token corresponding to a plurality of items to a first wallet of the at least a wallet in the blockchain network when the plurality of items is added to a first container of the at least a container. In other words, after the relationships between "wallet and container" and between "token and items" are established, once a container receives new items under surveillance, the embodiment issues a corresponding token to a wallet corresponding to the container. For example, if the token 20 shown in FIG. 2 is applied, and the asset 24 is a hundred doses of vaccine, the token 20 may be issued to a wallet, which is corresponding to a warehouse, when the hundred doses of vaccine are moved to the warehouse. If the asset 24 is one-day accommodation tickets, the token 20 may be issued to a wallet, which is corresponding to a buyer, when the trade is done. If the asset 24 is a one-tenth of the ownership of a property, the token 20 may be issued to a wallet, which is corresponding to an owner, when the owner obtains the right of the property.

In Step 306, the embodiment may modify a status of the first token according to a status of the plurality of items in the first container. In other words, the embodiment may record the status of the items into the token by modifying the status of the token. In an embodiment, the status of the token may be recorded in attributes of the token. For example, the attributes 220, 222 and 224 of the token 20 may describe the status of the asset 24, and may be modified after the token 20 is issued according to the status of the asset 24.

In short, the embodiment establishes a relationship between the token and the items. Therefore, when a user requires to retrieve the status of the items, the user may retrieve the status of the token to know the information of the items, thereby reducing the retrieving effort and saving the retrieving cost. In addition, since the token corresponds to and records information of the multiple items, the present invention does not need to split the token into sub-tokens for recording information of each item, thereby avoiding data fragments and increasing the retrieving performance.

Notably, the embodiments stated in the above are utilized for illustrating the concept of the present application. Those skilled in the art may make modifications and alterations accordingly, and not limited herein. For example, in Step 306, the embodiment may modify the status of the first token in response to the status of the items in the first container. In order to modify the status of the token, the embodiment may first filter the first token corresponding to the items from the blockchain network, for example, by retrieving a corresponding block in the blockchain network. After the first token is obtained, the first token may be burned out when the plurality of items is removed from surveillance. Or, the token may be transferred from the first wallet to a second wallet in the blockchain network when the plurality of items is transferred from the first container to a second container corresponding to the second wallet. In the transferring situation, the embodiment may further record a transaction history of the first token from the first wallet to the second wallet to trace a transfer history of the plurality of items from the first container to the second container correspondingly.

In addition, the tokens of the present invention may represent any information of the corresponding items. In an embodiment of the present invention, the blockchain network may be applied to a product traceability system, and each token thereof may record a transfer history of specified products of the product traceability system. In another embodiment of the present invention, each token may correspond to a hundred doses of vaccine and may be transferred to a wallet of a group, such as a village or a class, of people when the hundred doses of vaccine are injected thereto. In another embodiment of the present invention, each token may correspond to one-day accommodation tickets and may be transferred to a wallet of a buyer when the one-day accommodation tickets are transferred in a second-hand market. In another embodiment of the present invention, each token may correspond to a one-tenth of the ownership of the property and may be transferred correspondingly when the right of the property is transferred. In another embodiment of the present invention, each token may correspond to the right to acquire services, and users may make a seat reservation with the preference, such as walls, decorations, or lights in a movie theater or a restaurant by retrieving the attributes of the token.

Furthermore, since the transfer history of the items may be recorded according to the transaction history in the token of the present invention, the user may retrieve the transfer history of the items if needed. For example, the government may retrieve the vaccine delivery record when the vaccine is determined to have insufficient drug efficacy; the hotel may retrieve the transfer history to make a market survey; furthermore, the maker may endorse in the transaction history if the token represents a bill of exchange, a promissory note, or a cheque to make a guaranty.

In addition, as mentioned in the above, the token of the present invention may be burned out when the corresponding items are removed from surveillance. Take FIG. 2 as an example, if the asset 24 is an obligation, after the obligation is performed, the asset 24 is determined to be removed from surveillance, and the token 20 is burned out synchronously. Similarly, if the asset 24 represents one-day accommodation tickets, the token 20 may be burned out when the accommodation service is completed.

Note that, once a block in a blockchain is confirmed, data in any given block cannot be altered retroactively without the alteration of all subsequent blocks; that is, the confirmed block cannot be modified. To modify the status of the token, an embodiment of the present invention may transfer the token from a wallet to the same wallet in order to record the status in the transaction history. More specifically, the embodiment transfers a token from the first wallet to the second wallet, which is the same as the first wallet, such that the attributes of the token may be added or modified to reflect the (varied or invalidated) status of the corresponding items.

In addition, in the present invention, since the token may reflect the status of the corresponding items, the user may further retrieve the token to acquire the status of the items. In such a situation, the present invention further provides an analysis method for the blockchain network, such that the user may perform a Boolean search through different conditions to obtain accurate results.

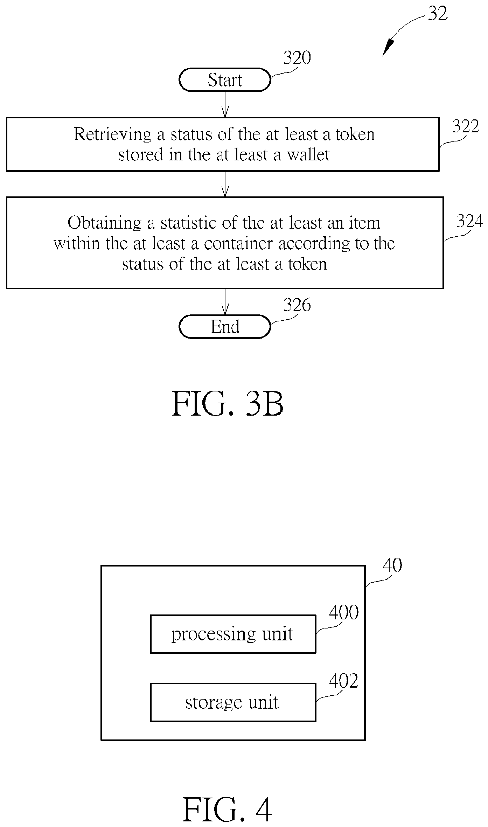

Please refer to FIG. 3B, which is a schematic diagram of a blockchain analysis process 32 according to an embodiment of the present invention. The blockchain analysis process 32 is applied to the abovementioned blockchain network; that is, the blockchain network comprises at least a wallet corresponding to at least a container, which contains at least an item, and the at least a wallet is configured to store at least a token corresponding to the at least an item. The blockchain analysis process 32 comprises the following steps:
Step 320: Start.
Step 322: Retrieving a status of the at least a token stored in the at least a wallet.
Step 324: Obtaining a statistic of the at least an item within the at least a container according to the status of the at least a token.
Step 326: End.

In Step 322, the embodiment retrieves a status of the at least a token stored in the at least a wallet. For example, the embodiment may acquire the at least an attribute in the token to determine the status of the item. In Step 324, the embodiment obtains a statistic of the at least an item within the at least a container according to the status of the at least a token. Take FIG. 2 as an example, if the asset 24 is a used car, and the attributes 220, 222 and 224 of the token 20 record information of engine displacement, scheduled maintenance and waterlogged status of the used car, then the embodiment of the present invention may provide the user to retrieve the token 20 in a criterion of engine displacement less than 2000 c.c., a number of scheduled maintenance less than 5 and un-waterlogged.

In addition, the statistic of the at least an item in Step 324 may be obtained according to, but not limited to, the token, the container or the combination thereof. For example, a hotel may retrieve the token, which is corresponding to one-day accommodation tickets, to obtain available rooms with smoking prohibition and to determine whether to promote these via a smoking prohibition attribute instead of pen and paper records. A bank may retrieve the token, which is corresponding to a one-tenth of the ownership of the property, to know whether the corresponding land has been mortgaged or not via a mortgaged attribute instead of consulting the land office of the government.

In an embodiment, the present invention filters at least a token corresponding to the at least an item and calculates an issuing volume of at least a token corresponding to the at least an item to determine a quantity of the at least an item. For example, the ministry of health may make the total volume control of the vaccine by retrieving the issuing volume of the tokens corresponding to the vaccine to avoid unnecessary cost such as expiration or inconvenience to store; the hotel may acquire the reservation information for a certain day by retrieving the issuing volume of the tokens corresponding to one-day accommodation tickets.

In an embodiment, the present invention also filters the at least a token corresponding to the at least an item and obtains a quantity of the at least a token corresponding to the at least an item in each of the at least a wallet to determine a distribution of the at least an item within the at least a container. For example, the ministry of health may acquire the distribution of vaccine delivery planning locations via a natural person attribute instead of a complete survey.

In an embodiment, the present invention also filters the at least a token corresponding to the at least an item and retrieves the transaction history of the at least a token corresponding to an item of the at least an item to determine the transfer history of the item. For example, the ministry of health may supervise the transaction history of the token corresponding to a hundred doses of vaccine to trace the transfer history of the vaccine; the assignee may confirm the endorsement history corresponding to a bill of exchange, or a promissory note, or a cheque to make a guaranty via the transaction history of the token.

Therefore, the embodiment of the present invention does not need to directly acquire the status of the items, and may retrieve the attributes in the token to obtain information of the items, so as to save the retrieving effort. In other words, the embodiment conducts statistical surveys on the token rather than the asset.

For example, a reservation website visitor may check the available accommodation with a certain criterion (e.g., smoking prohibition) by retrieving the token with certain attributes, but not be allowed to amend the reviewed information. For example, an investigator may obtain the vaccine distribution information by retrieving the token with the injection attributes, but not be allowed to amend the distribution information. Notably, the abovementioned blockchain network establishes a one-to-many relationship between the token and the items, i.e., a token is corresponding to multiple items. However, the blockchain analysis process 32 may not only be applied to the abovementioned blockchain network, but also be applied to a blockchain network with one-to-one, many-to-one, or even many-to-many relationship between token and item. That is, as long as the token may be corresponding to at least an item under surveillance, those skilled in the art may retrieve the status of the at least a token to obtain the statistic of the at least an item. Furthermore, the status of the token is not limited to the attribute; for example, the denomination of the token may be used to determine the ratio between the token and the corresponding vaccine; the issued date of the token may be used to determine the expired date of foods in a traceability system. Those skilled in the art may make modifications and alterations accordingly to fit the practical application scenarios.

In addition, the item management process 30, the blockchain analysis process 32, and the system using the same may be implemented and/or executed by a computer system. For example, FIG. 4 is a schematic diagram of a computer system 40 according to an embodiment of the present invention. As shown in FIG. 4, the computer system 40 comprises a processing unit 400 and a storage unit 402. In an embodiment, each unit of the system 40 may be implemented by an application-specific integrated circuit (ASIC). In an embodiment, the processing unit 400 may be an application processor (AP) or a digital signal processor (DSP), wherein the processing unit 400 may be a central processing unit (CPU), a graphics processing unit (GPU) or a tensor processing unit (TPU) to implement the database and blockchain accessing mentioned above, and not limited thereto. The storage unit 402 may store a program code to instruct the processing unit 400 to perform the function of the item management process 30 and the blockchain analysis process 32 of the present invention. The storage unit 402 may be a ROM (Read-only Memory), a RAM (Random-access Memory), a CD-ROM, an Optical Data Storage Device), a Non-volatile Memory such as an electrically erasable programmable read-only memory (EEPROM) or a flash memory, and not limited thereto.

Moreover, the computer system may further be modified accordingly to fit the practical application scenarios. For example, if the computer system 40 is applied to an accommodation reservation system, the computer system 40 may help a customer to find the available preferred rooms and reserve for the customer; if the computer system 40 is applied to a seat management system, the computer system 40 may help a movie theater or a restaurant to make an auction automatically for vacancies that are about to expire; if the computer system 40 is applied to a futures marketing system, the computer system 40 may combine the smart contract technique in the blockchain to help the trade between the buyers and the sellers.

In addition, a derivative is a contract that derives its value from the performance of an underlying asset in finance. In an embodiment, the tokens may be an underlying asset corresponding to a derivative, wherein the derivative may be an over-the-counter derivative or an exchange-traded derivative, and the derivative may also form as forwards, futures contracts, options, binary options, warrants, swaps, and variations thereof. For example, the futures contracts may be negotiated for the token corresponding to a certain asset, such as the one-day accommodation services or the precious metals, so as to allow market makers (liquidity providers) to compute an index of the status from the attributes. Therefore, the users may use the index such as the average house price, average fare, vacancy rate, supply and demand statistics, or their combination to make decisions. Furthermore, the token may help users to trade the futures contracts on the blockchain and help the users easier to deliver and transfer the rights of the items, for example, anyone who owns a token corresponding to a one-day accommodation ticket may get the service on the performance date.

The embodiments stated in the above are utilized for illustrating the concept of the present application. Those skilled in the art may make modifications and alterations accordingly, and not limited herein. Therefore, as long as a relationship is established between an item management system and a token with the attributes in a blockchain to reduce the retrieving effort, the requirements of the present application are satisfied and within the scope of the present application.

In summary, the present invention provides an item management method, a blockchain analysis method and a computer system using the same by establishing a relationship between the token and the items, so as to reduce the retrieving efforts and save the operation cost.

## Claims

1. A method (30) of item management, **characterised by,** comprising:
establishing a blockchain network comprising at least a wallet, which is corresponding to at least a container (302);
issuing a first token corresponding to a plurality of items to a first wallet of the at least a wallet in the blockchain network when the plurality of items is added to a first container of the at least a container (304); and
modifying a status of the first token according to a status of the plurality of items in the first container (306).

2. The method (30) of item management of claim 1, **characterised in that** modifying the status of the first token according to the status of the plurality of items in the first container (306) comprises:
filtering the first token corresponding to the plurality of items from the blockchain network; and
burning the first token when the plurality of items is removed from surveillance.

3. The method (30) of item management of claim 1, **characterised in that** modifying the status of the first token according to the status of the plurality of items in the first container (306) comprises:
filtering the first token corresponding to the plurality of items from the blockchain network;
transferring the first token from a first wallet to a second wallet of the at least a wallet in the blockchain network when the plurality of items is transferred from the first container to a second container corresponding to the second wallet within the at least a container; and
recording a transaction history from the first wallet to the second wallet in the first token to trace a transfer history of the plurality of items from the first container to the second container.

4. The method (30) of item management of claim 3, **characterised in that** the first wallet is the same as the second wallet, to modify an attribute (220, 222, 224) in the first token when the status of the plurality of items is varied.

5. The method (30) of item management of claim 3, **characterised in that** the first wallet is the same as the second wallet, to add an attribute (220, 222, 224) in the first token when the plurality of items is invalidated.

6. An analysis method (32) for a blockchain network, wherein the blockchain network comprises at least a wallet corresponding to at least a container, which comprises at least an item, and the at least a wallet is configured to store at least a token corresponding to the at least an item, the analysis method (32), **characterised by** comprising:
retrieving a status of the at least a token stored in the at least a wallet (322); and
obtaining a statistic of the at least an item within the at least a container according to the status of the at least a token (324).

7. The analysis method (32) of claim 6, **characterised in that** obtaining the statistic of the at least an item within the at least a container according to the status of the at least a token (324) comprises:
filtering the at least a token corresponding to the at least an item; and
calculating an issuing volume of the at least a token corresponding to the at least an item to determine a quantity of the at least an item.

8. The analysis method (32) of claim 6, **characterised in that** obtaining the statistic of the at least an item within the at least a container according to the status of the at least a token (324) comprises:
filtering the at least a token corresponding to the at least an item; and
obtaining a quantity of the at least a token corresponding to the at least an item in each of the at least a wallet to determine a distribution of the at least an item within the at least a container.

9. The analysis method (32) of claim 6, **characterised in that** the at least a token stores a transaction history indicating transactions of the at least a token within the at least a wallet for tracing a transfer history of the at least an item within the at least a container; wherein obtaining the statistic of the at least an item within the at least a container according to the status of the at least a token comprises:
filtering the at least a token corresponding to the at least an item; and
retrieving the transaction history of the at least a token corresponding to an item of the at least an item to determine the transfer history of the item of the at least an item.

10. A computer system, **characterised by**, comprising:
a processing unit (400); and
a storage unit (402), storing a program code, wherein the program code instructs the processing unit to execute the method (30) of claims 1-5 or the method (32) of claims 6-9.
